# EUROPÄISCHE PATENTSCHRIFT

(11) **EP 2 765 166 B1**
(45) Veröffentlichungstag und Bekanntmachung des Hinweises auf die Patenterteilung: **12.08.2015**
(21) Anmeldenummer: 13154920.6
(22) Anmeldetag: 12.02.2013
(51) Int. Cl.: C08L 97/02, B27N 1/00

(54) **Verwendung einer phosphathaltigen Zusammensetzung in Holzwerkstoffen zur Reduzierung der Emission von Aldehyden und/oder Säuren**
Use of a composition containing phosphate in wood materials for reducing the emission of aldehydes and/or acids
Utilisation d'une composition contenant du phosphate dans des matières dérivées du bois destinées à réduire l'émission de aldéhydes et/ou acides

(43) Veröffentlichungstag der Anmeldung: 13.08.2014
(73) Patentinhaber: Kronotec AG, 6006 Luzern (CH)
(72) Erfinder: Dr. Kalwa, Norbert, 32805 Horn-Bad Meinberg (DE); Siems, Jens, 17139 Malchin (DE)
(74) Vertreter: Morawski, Birgit

(56) Entgegenhaltungen:
- EP-A1- 2 532 498
- WO-A2-2009/027186
- US-A1- 2011 171 482

## Beschreibung

Die vorliegende Anmeldung betrifft die Verwendung einer phosphathaltigen Zusammensetzung nach Anspruch 1, ein Verfahren zur Herstellung von Holzwerkstoffplatten unter Verwendung der phosphathaltigen Zusammensetzung gemäß Anspruch 11 und eine phosphathaltige Zusammensetzung nach Anspruch 14.

Holzfaserdämmstoffplatten bestehen bekanntermaßen aus Lignozellulose oder lignozellulosehaltigen Materialien, wie Holzfasern. Lignozellulose umfasst als Bestandteile Zellulose, Hemizellulose und Lignin. Zellulose ist ein langkettiges Makromolekül, bestehend aus Glukoseeinheiten, Hemizellulose ein kurzkettiges, verzweigtes Makromolekül aus Pentosen und Lignin ein dreidimensionales Makromolekül aus Methoxyphenylpropaneinheiten. Zellulose und Hemizellulose bilden die Gerüstsubstanz der Zellwand, während Lignin als Füllsubstanz im Zellgerüst die Verholzung verursacht.

Die Herstellung von Holzfaser-Dämmstoffen ist auf Grund von ökologischen Aspekten in den letzten Jahren mehr und mehr in den Focus gelangt. Neben der Tatsache, dass Holz als nachwachsender Rohstoff unbegrenzt zur Verfügung steht, sind dabei auch Aspekte des geringeren Energieeinsatzes sowie der einfachen Entsorgung von Interesse.

Allerdings sind auch technisch/technologische Aspekte zu betrachten, die den Einsatz dieser Dämmstoffe zurzeit noch etwas erschweren. Ein wichtiger Punkt ist, dass Dämmstoffe auf Holzfaserbasis im Gegensatz zu vielen anderen Dämmmaterialien für die Nutzung einer Ausrüstung mit einem Flammschutzmittel bedürfen.

Weiter emittieren Dämmstoffe auf Holzfaserbasis, wie alle Produkte aus Holz, eine Vielzahl von flüchtigen organischen Verbindungen. Zu den flüchtigen organischen Verbindungen, auch VOCs genannt, gehören flüchtige organische Stoffe, die leicht verdampfen bzw. bereits bei niedrigeren Temperaturen, wie zum Beispiel bei Raumtemperatur als Gas vorliegen. Generell fallen die flüchtigen organischen Verbindungen entweder als Nebenprodukte während des Herstellungsprozesses an oder sie werden während des Wachstums des Baumes gebildet. Diese werden anschließend mehr oder weniger schnell an die Umgebung abgegeben. Beide Vorgänge führen zu spezifischen Problemen, die den gesamten Herstellungsprozess verteuern können und/oder zu Geruchsbelästigungen in der Nutzung der Holzfaserplatten führen können.

Dieses Problem besteht allerdings auch bei der Verwendung von Dämmstoffen auf Basis anderer Materialien. Grundsätzlich muss festgestellt werden, dass dieses Problem auch deshalb eine Relevanz besitzt, weil die Beladung mit Dämmstoffen (m² Dämmstoff / m³ Raum) üblicherweise relativ hoch ist. Dies tritt dann auch noch in Kombination mit geringen Luftwechselraten auf, was eine signifikante Aufkonzentration der VOC's über die Zeit ermöglicht.

In der Holzwerkstoffindustrie erfolgt die Herstellung der Holzfasern überwiegend nach dem TMP-Verfahren (Thermomechanical Pulping). In diesem Verfahren werden Holzhackschnitzel, die meist als Ausgangsprodukte dienen, vorgedämpft und anschließend unter hohem Druck und hoher Temperatur zwischen Mahlscheiben zu Fasern aufgeschlossen. Bei diesem Prozess wird ein Teil der leicht flüchtigen Verbindungen, wie die erwähnten Aldehyde, Säuren oder Alkohole aus der Holz- bzw. Fasermatrix ausgespült. Diese flüchtigen Verbindungen werden in das Prozesswasser abgegeben und/oder mit der Abluft in die Umgebung freigesetzt bzw. abgefangen. Ein Teil dieser flüchtigen organischen Verbindungen verbleibt jedoch auch in den Fasern und wird erst zu einem späteren Zeitpunkt langsam abgegeben.

Aber auch eine Vielzahl von weiteren chemischen Verbindungen entstehen aufgrund des spezifischen Herstellungsprozesses der Holzfasern. Bei dem üblicherweise angewendeten TMP-Verfahren herrschen Temperaturen von ca. 180°C in Anwesenheit von Wasser und/oder Wasserdampf. Zusätzlich liegt der pH-Wert in der Holzmatrix bei ca. 4,5 bis 6. Aufgrund dieses leicht sauren pH-Wertes können säurekatalysierte Reaktionen in der Holzmatrix ablaufen. So wird zum Beispiel aus den Mono- und Disacchariden, die in der Lignozellulose enthalten sind, Furfural als leicht flüchtiges Aldehyd gebildet.

Das Problem der Emission von organischen Komponenten aus den Holzfaserplatten, insbesondere von Aldehyden, ist umso gravierender, je niedriger die Dichte der hergestellten Holzfaserplatten ist. Während bei einer Faserplatte mit erhöhter Dichte (HDF) oder einer mitteldichten Faserplatte (MDF) keine erhöhten Werte der leicht flüchtigen organischen Bestandteile ermittelbar sind, ist bei Holzfaserplatten unterhalb einer Rohdichte von ca. 250 kg/m³, wie zum Beispiel den LDF-Platten, eine erhebliche VOC-Emission zu verzeichnen, da hier aufgrund der geringen Dichte Diffusionsvorgänge beschleunigt ablaufen können. Auch dies trägt zur schnellen Abgabe von organischen Verbindungen aus den Dämmmaterialien bei.

Dem Problem der Belastung von Innenräumen durch flüchtige organische Verbindungen (VOC) wird zurzeit durch verschiedenste Regelungen auf nationaler und internationaler Ebene Rechnung getragen. Damit ergibt sich für die Hersteller von Holzfaser-Dämmstoffen ein Auftrag zur Minderung der Emissionen.

Aus den oben genannten Gründen ist es daher erstrebenswert, die Freisetzung von leicht flüchtigen organischen Verbindungen aus Holzwerkstoffplatten, insbesondere aus Holzfaserdämmstoffplatten, zu reduzieren.

Ein Ansatz besteht in der Erhöhung des pH-Wertes in der Holzmatrix durch Zugabe von alkalischen Stoffen, um so die in der Holzmatrix ablaufenden säurekatalysierten Reaktionen zu verhindern bzw. zu reduzieren. Nachteilig dabei ist jedoch, dass die Zugabe von alkalischen Verbindungen, wie zum Beispiel Natronlauge zur Bildung von Essigsäure führt, die sich durch die Spaltung von Acetylgruppen der Hemizellulose durch die alkalische Verbindung bildet (siehe Roffael, E. et al., Holzzentralblatt 1990, 116: 1684-1685).

Der vorliegenden Erfindung liegt die technische Aufgabe zugrunde, die Emission an leicht flüchtigen organischen Verbindungen, wie den Aldehyden und Säuren, aus Holzfaserdämmstoffen bzw. Holzfaserdämmstoffplatten auf ein möglichst niedriges Niveau zu reduzieren, wobei in nur geringem Ausmaß in den Produktionsprozess eingegriffen werden soll.

Die gestellte Aufgabe wird durch die Verwendung von einer phosphathaltigen Zusammensetzung gemäß den Merkmalen des Anspruchs 1 gelöst.

Gemäß der vorliegenden Erfindung wird eine phosphathaltige Zusammensetzung aus mindestens einer ersten Komponente umfassend mindestens ein Ammoniumphosphat und mindestens einer zweiten Komponente umfassend Natriumhydrogenphosphat zur Reduzierung der Emission von Aldehyden und/oder Säuren aus Holzwerkstoffen, insbesondere Holzfaserdämmstoffen, verwendet.

Bei Verwendung der erfindungsgemäßen phosphathaltigen Zusammensetzung, die den Holzfasern zugegeben wird bzw. mit den Holzfasern im Herstellungsprozess einer Holzfaserdämmstoffplatte vermischt werden, hat sich erstaunlicherweise gezeigt, dass die Verwendung der phosphathaltigen Zusammensetzung zu einer deutlichen Reduzierung der Emission von Aldehyden und von Säuren, insbesondere organischen Säuren führt.

Insbesondere hat sich im Vergleich zur Verwendung von lediglich Ammoniumphosphaten, die z.B. Bestandteil von herkömmlichen Flammenschutzhemmern sind, gezeigt, dass bei Verwendung der erfindungsgemäßen Zusammensetzung aus mindestens einem Ammoniumphosphat und Natriumhydrogenphosphat, sowohl eine deutliche Emissionsreduzierung von organischen Säuren als auch während des Holzaufschlusses bzw. der Holzfaserherstellung freigesetzten Aldehyden erfolgt. Die Wirkung der erfindungsgemäßen phosphathaltigen Zusammensetzung in Holzwerkstoffen, insbesondere Holzfaserdämmstoffplatten, kann also auch in Form eines Aldehyd-Scavenger und/oder Säure-Scavenger beschrieben werden.

In einer Ausführungsform der vorliegend verwendeten phosphathaltigen Zusammensetzung ist das mindestens eine Ammoniumphosphat der ersten Komponente ausgewählt aus der Gruppe enthaltend Triammoniumphosphat (NH₄)₃P₃O₄, Diammoniumphosphat (NH₄)₂HP₃O₄, Monoammoniumphosphat (NH₄)H₂P₃O₄ und Ammoniumpolyphosphate [NH₄PO₃]ₙ.

Hierbei sind unter den Ammoniumpolyphosphaten Ammonium-Salze von Polyphosphaten zu verstehen. Allgemein stellen Polyphosphate Kondensationsprodukte von Salzen der orthoPhosphorsäure (H₃PO₄) mit der allgemeinen Summenformel M'ₙ₊₂PₙO₃ₙ₊₁ und der Struktur M'-O-[P(OM')(O)-O]ₙ-M' dar, wobei M' ein einwertiges Metall oder wie vorliegend ein Ammonium-Kation NH₄⁺ sein kann. Zu den Polyphosphaten werden sehr häufig auch die kurzkettigen (also eigentlich oligo-) Phosphate gezählt. Der Polymerisationsgrad n der Polyphosphate kann bis zu mehrere Tausend betragen. Vorliegend ist der Polymerisationsgrad n der verwendeten Ammoniumpolyphosphate größer als 10, bevorzugt größer als 15.

In einer bevorzugten Ausführungsform umfasst die erste Komponente der phosphathaltigen Zusammensetzung Triammoniumphosphat (NH₄)₃P₃O₄ und Ammoniumpolyphosphate [NH₄PO₃]ₙ. Es ist weiterhin bevorzugt, wenn die erste Komponente 15-35 Gew%, bevorzugt 20-30 Gew% Triammoniumphosphat (NH₄)₃P₃O₄ und 45-65 Gew%, bevorzugt 50-60 Gew% Ammoniumpolyphosphate [NH₄PO₃]ₙ, jeweils bezogen auf die Gesamtmenge an erster Komponente, umfasst.

In einer weiteren Ausführungsform umfasst die erste Komponente der vorliegend verwendeten phosphathaltigen Zusammensetzung mindestens eine weitere basische Substanz, insbesondere eine organische Base. Die organische Base ist bevorzugt ausgewählt aus einer Gruppe enthaltend Amine, Harnstoff und Guanidin. Ganz besonders bevorzugt ist die Verwendung von 10-30 Gew%, bevorzugt 15-25 Gew% Guanidin bezogen auf die Gesamtmenge der ersten Komponente.

In einer weiteren bevorzugten Ausführungsform umfasst die zweite Komponente eine Mischung aus Natriumhydrogenphosphat Na₂HPO₄ und Natriumdihydrogenphosphat NaH₂PO₄, wobei das Verhältnis von Na₂HPO₄ zu NaH₂PO₄ 1,5 : 1 beträgt. Somit wird als zweite Komponente bevorzugt ein Phosphat-Puffersystem verwendet, mit welchem typischerweise Puffer mit pH-Werten zwischen 5 bis 8 einstellbar sind.

Bevorzugterweise weist das Puffersystem aus Natriumhydrogenphosphat Na₂HPO₄ und Natriumdihydrogenphosphat NaH₂PO₄ eine Konzentration zwischen 0,75 mol/l bis 2,0 mol/l, bevorzugt zwischen 1,0 mol/l bis 1,5 mol/l, insbesondere bevorzugt zwischen 1,1 mol/l bis 1,3 mol/l. Ganz besonders bevorzugt ist eine Pufferkonzentration von 1,15 mol/l (entspricht 15%).

In einer weitergehenden Variante der vorliegend verwendeten phosphathaltigen Zusammensetzung beträgt das Verhältnis der ersten Komponente zur zweiten Komponente zwischen 3:1 und 10:1, bevorzugt 4:1 und 8:1, insbesondere bevorzugt 4:1.

In einer weiteren Ausführungsform wird die phosphathaltige Zusammensetzung mit mindestens einem weiteren Bindemittel eingesetzt.

Bevorzugt ist das weitere Bindemittel mindestens ein Isocyanat, ausgewählt aus einer Gruppe enthaltend aliphatische und aromatische Isocyanate. Typischerweise können als aliphatische Isocyanate z.B. Hexamethylendiisocyanat (HDI), Isophorondiisocyanat (IPDI) und/oder 1,4-Cyclohexyldiisocyanat (CHDI) verwendet werden. Als bevorzugte aromatische Polyisocyanate können Polymeres Diphenylmethandiisocyanat (PMDI) Toluylendiisocyanat (TDI) und/oder Diphenylmethandiisocyanat (MDI) zum Einsatz kommen, wobei PMDI besonders bevorzugt ist. Das Isocyanat unterliegt bei seiner Verwendung als Bindemittel zwei chemischen Reaktionen. Zum einen bildet es in Gegenwart von Wasser Polyharnstoff aus. Parallel erfolgt die Anbindung an die Holzfasern durch Ausbildung einer Urethan-Bindung durch die Reaktion von Isocyanate mit den freien Hydroxy-Gruppen der Zellulose. Als Bindemittel können aber auch Phenolharze und/oder Bikomponentenfasern zum Einsatz kommen. Bikomponentenfasern (BiCo-Stützfasern) bestehen typischerweise aus einem Tragfilament oder aus einer Kernfaser aus einem Kunststoff mit höherer Temperaturbeständigkeit, die aus einem Kunststoff mit einem niedrigeren Schmelzpunkt umhüllt bzw. ummantelt ist. Die Hülle bzw. der Mantel ermöglicht nach Aufschmelzen eine Vernetzung der Holzfasern.

Es ist insbesondere bevorzugt, wenn die vorliegende phosphathaltige Zusammensetzung zur Reduzierung von während des wässrigen Holzaufschlusses freigesetzten Aldehyden eingesetzt wird. Wie oben ausführlich erläutert, erfolgt eine Freisetzung von Aldehyden während der hydrolytischen Aufarbeitung von Holz bzw. Lignozellulose. Dabei werden die Aldehyde aus den Grundbausteinen der Zellulose oder Hemizellulose gebildet. So wird Furfural aus Mono- und Disacchariden der Zellulose bzw. Hemizellulose gebildet, während aromatische Aldehyde während des partiell stattfindenden hydrolytischen Aufschlusses von Lignin freigesetzt werden können. Entsprechend wird die phosphathaltige Zusammensetzung zur Reduzierung der Emission von von C₁-C₁₀ Aldehyden, insbesondere bevorzugt Formaldehyd, Acetaldehyd, Pentanal, Hexanal oder auch Furfural u.a. eingesetzt werden.

Es ist ebenfalls bevorzugt, wenn die phosphathaltige Zusammensetzung zur Reduzierung der Emission von organischen Säuren aus Holzwerkstoffen verwendet wird. Organische Säuren fallen insbesondere als Spaltprodukte der Holzbestandteile Zellulose, Hemizellulose und Lignin an, wobei bevorzugt Alkansäuren, wie Essigsäure und Propionsäure oder aromatische Säuren gebildet werden.

Es ist ebenfalls denkbar und bevorzugt, wenn die phosphathaltige Zusammensetzung zur Reduzierung von aus in der Holzwerkstoffplatte verwendeten Holzspänen freigesetzten Terpenen, insbesondere C₁₀-Monoterpene und C₁₅-Sesquiterpene, insbesondere bevorzugt acyclische oder cyclische Monoterpene eingesetzt werden.

Typische acyclische Terpene sind Terpenkohlenwasserstoffe wie Myrcen, Terpenalkohole wie Geraniol, Linalool, Ipsenol und Terpenaldehyde wie Citral. Typische Vertreter der monocyclischen Terpene sind p-Menthan, Terpinen, Limonen oder Carvon, und typische Vertreter der bicyclischen Terpene sind Caran, Pinan, Bornan, wobei insbesondere 3-Caren und α-Pinen von Bedeutung sind. Terpene sind Bestandteile der Baumharze und sind daher besonders in sehr harzhaltigen Baumarten wie Kiefer oder Fichte vorhanden.

Die unter Verwendung der vorliegenden phosphathaltigen Zusammensetzung hergestellten Holzwerkstoffplatten bzw. Holzfaserdämmstoffplatten weisen bevorzugt eine reduzierte Aldehydemission, insbesondere eine Furfuralemission von weniger als 10 µg/m³, insbesondere von weniger als 6 µg/m³, und eine reduzierte Säureemission, insbesondere eines Essigsäureemission von weniger als 120 µg/m³, insbesondere von weniger als 100 µg/m³ auf.

Die phosphathaltige Zusammensetzung wird in einem Verfahren zur Herstellung einer Holzwerkstoffplatte, insbesondere einer Holzfaserdämmstoffplatte mit einer reduzierten Emission von Aldehyden und/oder Säuren verwendet, wobei das Verfahren die folgenden Schritte umfasst:
a) Herstellen von Holzfasern aus Holzhackschnitzeln,
b) In-Kontaktbringen der Holzfasern mit der phosphathaltigen Zusammensetzung mit den oben beschriebenen Merkmalen,
c) Streuen der Mischung von Holzfasern und der mindestens einen Zusammensetzung aus Schritt b) auf ein Transportband, und
d) Verpressen der gebildeten Fasermatte bei Temperaturen zwischen 100°C und 170°C, bevorzugt 130°C und 150°C, insbesondere bei 130°C.

Zur Herstellung der Holzfasern gemäß Schritt a) werden die Holzhackschnitzel zunächst gereinigt, anschließend zerfasert und getrocknet.

Das In-Kontaktbringen der Holzfasern mit der phosphathaltigen Zusammensetzung in Schritt b) erfolgt bevorzugt in einem Blow-Line-Verfahren, bei dem die phosphathaltige Zusammensetzung in den Holzfaserstrom eingespritzt wird.

Es ist auch möglich, die phosphathaltige Zusammensetzung mit einem Bindemittel während der Dosierung in der Blow-Line-Zuführung zu mischen und anschließend in den Holzfaserstrom einzuspritzen. Die phosphathaltige Zusammensetzung und das weitere Bindemittel können aber auch nacheinander mit dem Holzfaserstrom kontaktiert werden. Geeignete Bindemittel wurden vorstehend bereits angeführt.

Es ist auch denkbar, die vorliegende Zusammensetzung während des Dämpfens der Hackschnitzel einzuführen oder im Refiner zuzugeben.

Dabei können 0.5 bis 15 %, bevorzugt 1 bis 10 %, insbesondere bevorzugt 5 bis 8% der phosphathaltigen Zusammensetzung auf die Holzfasern aufgetragen werden.

Es ist bevorzugt, wenn die Holzfasern in Abhängigkeit vom verwendeten Anlagetypen und Verfahren vor oder nach dem Aufbringen der phosphathaltigen Zusammensetzung gemäß Schritt b) mit einem geeigneten Bindemittel zusätzlich beleimt werden.

In dem vorliegenden Verfahren wird die phosphathaltige Zusammensetzung bevorzugt in Form einer wässrigen Lösung mit einem Anteil von mindestens 20 Gew%, bevorzugt von mindestens 40 Gew%, insbesondere bevorzugt von mindestens 50 Gew% verwendet.

Es ist aber auch denkbar, die phosphathaltige Zusammensetzung mittels Trockenbeleimung mit den Holzfasern in Kontakt zu bringen. Die phosphathaltige Zusammensetzung oder eine Mischung der phosphathaltigen Zusammensetzung mit einem weiteren Bindemittel wird hier durch extrem feines Verdüsen auf die getrockneten Holzfasern aufgebracht. Eine derartige Trockenbeleimung reduziert den Leimverbrauch gegenüber einer Blow-Line-Beleimung drastisch.

Nach Streuen der Mischung aus Holzfasern, phosphathaltiger Zusammensetzung und Bindemittel auf ein Transportband unter Ausbildung einer Holzfasermatte erfolgt zunächst ein Vorpressen, bei der die Dicke der Matte im Rahmen einer kalten Vorverdichtung reduziert wird. Anschließend wird eine Mattenbesäumung durchgeführt, während der Seitenstreifen von der Fasermatte abgetrennt werden und die Seitenstreifen in den Prozess zurückgeführt werden.

Das anschließende Verpressen der Holzfasermatte erfolgt, wie vorangehend ausgeführt, bei Temperaturen zwischen 100 und 170°C, bevorzugt 130 und 150°C, insbesondere bei 130°C. Somit werden vorliegend die Temperaturen bei der Heizpressung z.B. in einem kontinuierlich betriebenen Ofen, um bis zu 50 °C und mehr im Vergleich zu den üblicherweise verwendeten Presstemperaturen von 180 °C gesenkt.

Die Herstellung der Holzfaserdämmstoffmatten, insbesondere der Vorgang des Verpressens, erfolgt somit in einer Fahrweise bei erniedrigter Temperatur und einem um ca. 10-20% erhöhtem Vorschub.

Während des Verpressens kommt es typischerweise zu einer Aktivierung des Bindemittels z.B. einem Aufschmelzen des thermoplastischen Mantels im Falle der Verwendung von Bikomponentenfasern als Bindemittel, wodurch eine feste Verbindung zwischen den Holzfasern und dem Bindemittel hergestellt wird.

In der Endbearbeitung wird die Fasermatte schließlich auf die gewünschten Maße reduziert und gekühlt.

Es ist ebenfalls vorstellbar, dass mehr als ein Bindemittel verwendet werden. So können neben den bereits erwähnten Bindemitteln aus der Gruppe der Isocyanate, Phenolharze oder Bikomponentenfasern weitere Bindemittel, wie Granulat aus Kunststoff zugesetzt werden.

Gegenstand der vorliegenden Erfindung ist gemäß Anspruch 14 ebenfalls eine phosphathaltige Zusammensetzung umfassend Triammoniumphosphat (NH₄)₃P₃O₄, Ammoniumpolyphosphate [NH₄PO₃]ₙ. Guanidin, Natriumhydrogenphosphat Na₂HPO₄ und Natriumdihydrogenphosphat NaH₂PO₄. Die quantitative Zusammensetzung ist oben ausführlich beschrieben. Die vorliegende phosphathaltige Zusammensetzung ermöglicht die Reduzierung der Emission von Aldehyden aus Holzwerkstoffplatten, insbesondere Holzfaserdämmstoffplatten.

Die Erfindung wird nachfolgend an einem Ausführungsbeispiel näher erläutert.

### Beispiel

Gelöst wird die Aufgabe der vorliegenden Erfindung durch die Zugabe eines spezifischen Salz-Gemisches und bei der Zerfaserung des Holzes und einer Reduzierung der Temperaturen bei der eigentlichen Herstellung des Dämmstoffes im Contiofen.

Das zugesetzte Salz ist ein Gemisch aus zwei Komponenten. Die erste Komponente (K1) ist ein Flammschutzmittel auf Basis von Ammonium(poly)phosphaten. Es handelt sich dabei um das Produkt INH 6442 der Fa. Eco-Chem.

Die zweite Komponente (K2) ist ein Gemisch aus Na₂HPO₄/NaH₂PO₄ in einem Verhältnis von 1,5: 1.

Die Gesamtmenge des zugesetzten Salzgemisches liegt bei 8% bezogen auf Fasern. Die Abmischung der beiden Komponenten variiert zwischen 10 % Komponente 1 : 90 % Komponente 2 bis zu 90 % Komponente 1 und 10% Komponente 2.

Die Komponenten wurden als max. 50%ige Lösung in die Blow-Line appliziert. Anschließend wurden die Holzfasern getrocknet und mit Bico-Stützfasern vermischt durch einen ContiOfen gefahren. Dabei wurden die Temperaturen im Ofen um 20-40°C abgesenkt.

Anschließend wurden Proben des Dämmstoffes in einer Prüfkammer auf ihre VOC-Emission geprüft. Als Beurteilungsmaßstab wurde das AgBB-Schema verwendet. Die Ergebnisse für zwei ausgewählte Emissionsverbindungen Essigsäure und Furfural sind in der unten stehenden Tabelle 1 wiedergegeben. Die anderen Parameter spielten im Hinblick auf die Erfüllung der Anforderungen des AgBB- Schemas (nach 28 Tagen: < 1000 µg/m³ im Prüfraum) keine Rolle. Neben der Versuchsvariante mit einem Gemisch aus K1 und K2 sind auch eine Nullprobe lediglich mit der Komponente K1 bei üblicher Presstemperatur eine Variante lediglich mit der Komponente K1 bei reduzierter Temperatur und erhöhtem Vorschub aufgeführt. Die Angaben zur Menge der Komponenten K1 und K2 beziehen sich jeweils auf die verwendeten Fasern.

**Tabelle 1**

| | **Emissionen VOC** | | | | | |
|---|---|---|---|---|---|---|
| | 3 Tage µg/m³ | 3 Tage µg/m³ | 7 Tage µg/m³ | 7 Tage µg/m³ | 28 Tage µg/m³ | 28 Tage µg/m³ |
| Parameter | Essigsäure | Furfural | Essigsäure | Furfural | Essigsäure | Furfural |
| Nullprobe 8% K1 | 4098 | 35,2 | 3355 | 15,5 | 2500 | 12 |
| 8% K1 und 4% K2 (nicht erfindungsgemäß) | 1208 | 56 | 1282 | 55 | 1100 | 41 |
| 8% K1 Reduzierte Temperatur / erhöhter Vorschub | 2100 | 20 | 1500 | 16 | 1320 | 15 |
| 8% K1 und 2% K2 reduzierte Temperatur / erhöhter Vorschub | 690 | 6 | 120 | 0 | 100 | 0 |

Wie aus Tabelle 1 zu entnehmen ist, werden die Anforderungen des AgBB-Schemas bei den ersten drei Varianten bereits durch die Emission an Essigsäure überschritten. Dass die Anforderungen durch eine Zugabe von einem Gemisch von Ammoniumphosphaten / Natriumhydrogenphosphaten bei einem deutlichen Überschuss von Ammoniumphosphaten und der Absenkung der Produktionstemperatur erreicht wird, ist überraschend. Es hatte sich nämlich gezeigt, dass bei einer Erhöhung der Zugabe der Komponente K2 (Natriumhydrogenphosphat-Puffersystem) im Vergleich zu den Ammoniumphosphaten, sich die Emissionswerte nach dem Durchlaufen eines Minimums wieder erhöht hatten. Dieses Minimum lag bei ca. 8% Zugabe bezogen auf Fasern. Zudem war von dem verwendeten Flammschutzmittel keine emissionsmindernde Wirkung bekannt. Auch die Absenkung der Produktionstemperatur im Contiofen alleine hatte keine ausreichenden Ergebnisse geliefert.

## Patentansprüche

1. Verwendung einer phosphathaltigen Zusammensetzung aus
- mindestens einer ersten Komponente K1 umfassend mindestens ein Ammoniumphosphat und
- mindestens einer zweiten Komponente K2 umfassend eine Mischung aus Natriumhydrogenphosphat Na₂HPO₄ und Natriumdihydrogenphosphat NaH₂PO₄ .
zur Reduzierung der Emission von Aldehyden und/oder Säuren aus Holzwerkstoffplatten, insbesondere aus Holzfaserdämmstoffen, wobei das Verhältnis der ersten Komponente K1 zur zweiten Komponente K2 zwischen 3:1 und 10:1 liegt.

2. Verwendung nach Anspruch 1, **dadurch gekennzeichnet, dass** das mindestens eine Ammoniumphosphat der ersten Komponente K1 ausgewählt ist aus der Gruppe enthaltend Triammoniumphosphat (NH₄)₃PO₄, Diammoniumphosphat (NH₄)₂HPO₄, Monoammoniumphosphat (NH₄)H₂PO₄ und Ammoniumpolyphosphate [NH₄PO₃]ₙ.

3. Verwendung nach Anspruch 1 oder 2, **dadurch gekennzeichnet, dass** die erste Komponente K1 Triammoniumphosphat (NH₄)₃PO₄ und Ammoniumpolyphosphate [NH₄PO₃]ₙ umfasst.

4. Verwendung nach einem der vorhergehenden Ansprüche, **dadurch gekennzeichnet, dass** die erste Komponente K1 15-35 Gew%, bevorzugt 20-30 Gew% Triammoniumphosphat (NH₄)₃PO₄ und 45-65 Gew%, bevorzugt 50-60 Gew% Ammoniumpolyphosphate [NH₄PO₃]ₙ umfasst.

5. Verwendung nach einem der vorhergehenden Ansprüche, **dadurch gekennzeichnet, dass** die erste Komponente K1 mindestens eine weitere basische Substanz, insbesondere eine organische Base umfasst.

6. Verwendung nach einem der vorhergehenden Ansprüche, **dadurch gekennzeichnet, dass** die erste Komponente K1 mindestens eine organische Base ausgewählt aus der Gruppe enthaltend Amine, Harnstoff und Guanidin umfasst.

7. Verwendung nach einem der vorhergehenden Ansprüche, **dadurch gekennzeichnet, dass** die erste Komponente K1 10-30 Gew%, bevorzugt 15-25 Gew% Guanidin umfasst.

8. Verwendung nach einem der vorhergehenden Ansprüche, **dadurch gekennzeichnet, dass** das Verhältnis der ersten Komponente K1 zur zweiten Komponente K2 zwischen 4:1 und 8:1, insbesondere bevorzugt bei 4:1 liegt.

9. Verwendung einer Zusammensetzung nach einem der vorhergehenden Ansprüche zur Reduzierung der Emission von während des Holzaufschlusses freigesetzten Aldehyden.

10. Verwendung einer Zusammensetzung nach einem der vorhergehenden Ansprüche, zur Reduzierung der Emission von organischen Säuren.

11. Verfahren zur Herstellung einer Holzwerkstoffplatte, insbesondere einer Holzfaserdämmstoffplatte mit einer reduzierten Emission von Aldehyden und/oder Säuren, wobei das Verfahren die folgenden Schritte umfasst.
a) Herstellen von Holzfasern aus Holzhackschnitzeln,
b) In-Kontaktbringen der Holzfasern mit mindestens einer Zusammensetzung nach einem der vorhergehenden Ansprüche, und
c) Streuen der Mischung von Holzfasern und der mindestens einen Zusammensetzung aus Schritt b) auf ein Transportband, und
d) Heißpressung der gebildeten Fasermatte bei Temperaturen zwischen 100 und 170°C, bevorzugt 130 und 150°C, insbesondere 130°C.

12. Verfahren nach Anspruch 11, **dadurch gekennzeichnet, dass** die Holzfasern vor oder nach dem Aufbringen der Zusammensetzung gemäß Schritt b) mit einem Bindemittel vermischt werden.

13. Verfahren nach Anspruch 11 oder 12, **dadurch gekennzeichnet, dass** die Zusammensetzung in Form einer wässrigen Lösung mit einem Anteil von mindestens 20 Gew%, bevorzugt von mindestens 40 Gew%, insbesondere bevorzugt von mindestens 50 Gew% verwendet wird.

14. Phosphathaltige Zusammensetzung umfassend Triammoniumphosphat (NH₄)₃PO₄, Ammoniumpolyphosphate [NH₄PO₃]ₙ, Guanidin, Natriumhydrogenphosphat Na₂HPO₄ und Natriumdihydrogenphosphat NaH₂PO₄.

## Claims

1. Use of a phosphate-containing composition composed of
- at least one first component K1 comprising at least one ammonium phosphate and
- at least one second component K2 comprising a mixture of sodium hydrogenphosphate Na₂HPO₄ and sodium dihydrogenphosphate NaH₂PO₄
for reducing the emission of aldehydes and/or acids from wood material boards, in particular wood fibre insulation materials, wherein the ratio of the first component K1 to the second component K2 is in the range from 3:1 to 10:1.

2. Use according to Claim 1, **characterized in that** the at least one ammonium phosphate of the first component K1 is selected from the group consisting of triammonium phosphate (NH₄)₃PO₄, diammonium phosphate (NH₄)₂HPO₄, monoammonium phosphate (NH₄)H₂PO₄ and ammonium polyphosphates (NH₄PO₃)ₙ.

3. Use according to Claim 1 or 2, **characterized in that** the first component K1 comprises triammonium phosphate (NH₄)₃PO₄ and ammonium polyphosphates (NH₄PO₃)ₙ.

4. Use according to any one of the preceding claims, **characterized in that** the first component K1 comprises 15-35% by weight, preferably 20-30% by weight, of triammonium phosphate (NH₄)₃PO₄ and 45-65% by weight, preferably 50-60% by weight, of ammonium polyphosphates (NH₄PO₃)ₙ.

5. Use according to any one of the preceding claims, **characterized in that** the first component K1 comprises at least one further basic substance, in particular an organic base.

6. Use according to any one of the preceding claims, **characterized in that** the first component K1 comprises at least one organic base selected from the group consisting of amines, urea and guanidine.

7. Use according to any one of the preceding claims, **characterized in that** the first component K1 comprises 10-30% by weight, preferably 15-25% by weight, of guanidine.

8. Use according to any one of the preceding claims, **characterized in that** the ratio of the first component K1 to the second component K2 is in the range from 4:1 to 8:1, particularly preferably 4:1.

9. Use of a composition according to any one of the preceding claims for reducing the emission of aldehydes liberated during digestion of the wood.

10. Use of a composition according to any one of the preceding claims for reducing the emission of organic acids.

11. Process for producing a wood material board, in particular a wood fibre insulation material board, having reduced emission of aldehydes and/or acids, wherein the process comprises the following steps:
a) production of wood fibres from wood chips,
b) contacting of the wood fibres with at least one composition according to any one of the preceding claims and
c) scattering of the mixture of wood fibres and the at least one composition from step b) onto a conveyor belt and
d) hot pressing of the resulting fibre mat at temperatures in the range from 100 to 170°C, preferably from 130 to 150°C, in particular 130°C.

12. Process according to Claim 11, **characterized in that** the wood fibres are mixed with a binder before or after application of the composition according to step b).

13. Process according to Claim 11 or 12, **characterized in that** the composition is used in the form of an aqueous solution having a content of at least 20% by weight, preferably at least 40% by weight, particularly preferably at least 50% by weight.

14. Phosphate-containing composition comprising triammonium phosphate (NH₄)₃PO₄, ammonium polyphosphates (NH₄PO₃)ₙ, guanidine, sodium hydrogenphosphate Na₂HPO₄ and sodium dihydrogenphosphate NaH₂PO₄.

## Revendications

1. Utilisation d'une composition phosphatée à base
- d'au moins un premier composant K1 comprenant au moins un phosphate d'ammonium et
- d'au moins un deuxième composant K2 comprenant un mélange d'hydrogénophosphate de sodium Na₂HPO₄ et de dihydrogénophosphate de sodium NaH₂PO₄,
pour la réduction de l'émission d'aldéhydes et/ou d'acides à partir de panneaux en matériau dérivé du bois, en particulier d'isolants à base de fibres de bois, le rapport du premier composant K1 au deuxième composant K2 étant compris entre 3:1 et 10:1.

2. Utilisation selon la revendication 1, **caractérisée en ce que** ledit au moins un phosphate d'ammonium du premier composant K1 est choisi dans le groupe contenant le phosphate de triammonium (NH₄)₃PO₄, le phosphate de diammonium (NH₄)₂HPO₄, le phosphate de monoammonium (NH₄)H₂PO₄ et les polyphosphates d'ammonium [NH₄PO₃]ₙ.

3. Utilisation selon la revendication 1 ou 2, **caractérisée en ce que** le premier composant K1 comprend du phosphate de triammonium (NH₄)₃PO₄ et des polyphosphates d'ammonium [NH₄PO₃]ₙ.

4. Utilisation selon l'une quelconque des revendications précédentes, **caractérisée en ce que** le premier composant K1 comprend 15-35 % en poids, de préférence 20-30 % en poids de phosphate de triammonium (NH₄)₃PO₄ et 45-65 % en poids, de préférence 50-60 % en poids de polyphosphates d'ammonium [NH₄PO₃]ₙ.

5. Utilisation selon l'une quelconque des revendications précédentes, **caractérisée en ce que** le premier composant K1 comprend au moins une autre substance basique, en particulier une base organique.

6. Utilisation selon l'une quelconque des revendications précédentes, **caractérisée en ce que** le premier composant K1 comprend au moins une base organique choisie dans le groupe contenant des amines, l'urée et la guanidine.

7. Utilisation selon l'une quelconque des revendications précédentes, **caractérisée en ce que** le premier composant K1 comprend 10-30 % en poids, de préférence 15-25 % en poids de guanidine.

8. Utilisation selon l'une quelconque des revendications précédentes, **caractérisée en ce que** le rapport du premier composant K1 au deuxième composant K2 est compris entre 4:1 et 8:1, de façon particulièrement préférée est de 4:1.

9. Utilisation d'une composition selon l'une quelconque des revendications précédentes, pour la réduction de l'émission d'aldéhydes libérés pendant le défibrage.

10. Utilisation d'une composition selon l'une quelconque des revendications précédentes, pour la réduction de l'émission d'acides organiques.

11. Procédé pour la fabrication d'un panneau en matériau dérivé du bois, en particulier d'un panneau isolant à base de fibres de bois, avec une émission réduite d'aldéhydes et/ou d'acides, le procédé comprenant les étapes suivantes :
a) production de fibres de bois à partir de copeaux de bois,
b) mise en contact des fibres de bois avec au moins une composition selon l'une quelconque des revendications précédentes, et
c) dispersion du mélange de fibres de bois et de ladite au moins une composition provenant de l'étape b) sur une bande transporteuse, et
d) pressage à chaud du mat de fibres formé, à des températures comprises entre 100 et 170 °C, de préférence 130 et 150 °C, en particulier de 130 °C.

12. Procédé selon la revendication 11, **caractérisé en ce qu'**avant ou après l'application de la composition selon l'étape b) on mélange les fibres de bois avec un liant.

13. Procédé selon la revendication 11 ou 12, **caractérisé en ce qu'**on utilise la composition sous forme d'une solution aqueuse ayant une teneur d'au moins 20 % en poids, de préférence d'au moins 40 % en poids, de façon particulièrement préférée d'au moins 50 % en poids.

14. Composition phosphatée comprenant du phosphate de triammonium (NH₄)₃PO₄, des polyphosphates d'ammonium [NH₄PO₃]ₙ, de la guanidine, de l'hydrogénophosphate de sodium Na₂HPO₄ et du dihydrogénophosphate de sodium NaH₂PO₄.
